# EUROPÄISCHE PATENTSCHRIFT

(11) **EP 2 251 945 B1**
(45) Veröffentlichungstag und Bekanntmachung des Hinweises auf die Patenterteilung: **21.12.2016**
(21) Anmeldenummer: 10004787.7
(22) Anmeldetag: 06.05.2010
(51) Int. Cl.: H02B 1/20

(54) **Stromschienen- und Verbindersystem**
Busbars and connector system
Système de rails conducteurs et de connecteurs

(30) Priorität: 15.05.2009 DE 102009021460
(43) Veröffentlichungstag der Anmeldung: 17.11.2010
(73) Patentinhaber: Eaton Electrical IP GmbH & Co. KG, 12529 Schönefeld (DE)
(72) Erfinder: Knörrchen, Oliver, 50858 Köln (DE); Nowak, Jan Karol, 53881 Euskirchen (DE); Stanke, Stephan, 53359 Rheinbach (DE)

(56) Entgegenhaltungen:
- EP-A2- 1 049 227
- DE-A1-102005 023 452

## Beschreibung

Die Erfindung betrifft eine mehrpolige Anordnung eines Stromschienen- und Verbindersystems zur Spannungsversorgung für mindestens zwei nebeneinander auf einem sich längserstreckenden Tragorgan befindliche elektrische Schaltgeräte.

Es sind verschiedene Stromschienen- und Verteilersysteme bekannt. Ein beispielsweise zu nennendes System in DE 4021825 C2 dient der gemeinsamen Stromeinspeisung für auf einem Tragorgan angeordnete Schaltgeräte, wobei die Stromführung über eine Stromschiene erfolgt, aus der zu jedem Schaltgerät L-förmige Steckerelemente die Stromeinspeisung herstellen. Zur Montage und Demontage müssen die Steckerelemente jeweils mit einem Werkzeug befestigt bzw. gelöst werden.

Bei einem anderen System (DE 28 43 858 A1) umfasst das Stromschienensystem parallel nebeneinander angeordnete Flachschienen in einem mehrwandigen Kastenprofil aus Isolierstoff, und Halteelemente, die auf einem Tragorgan aufbringbar sind und zum Halten der Flachschienen dienen, wobei die Halteelemente senkrecht zum Tragorgan und zum Stromschienensystem ausgebildet sind, so dass die Flachschienen parallel zum sich längserstreckenden Tragorgan zu liegen kommen. Die Flachschienen weisen eine Längserstreckung auf, die mindestens der Summe der Breite mehrerer mit ihrer Rückseite auf dem Tragorgan anreihbarer Schaltgeräte entspricht, und sind derart gehalten, dass allein ihre Schmalseiten von außen frei zugänglich sind. Weiter umfasst das Verbindersystem des genannten Systems von außen auf die Schmalseiten der Flachschienen aufsetzbare elektrische Leiterverbindungen, die der Potentialführung von den Flachschienen zu den Schaltgeräten dienen. Die Leiterverbindungen sind als flexible Leitungen ausgebildet, deren Endkontakte über Schraubklemmen bei der Montage und der Demontage jeweils einzeln mit einem Werkzeug befestigt, bzw. gelöst werden müssen. Als Nachteile sind zu erwähnen, dass die Endkontakte keine elektrische Isolierung aufweisen und dass die Schraubklemmen nicht gegen Verlust der Schrauben gesichert sind.

Weiterhin sind mehrpolige Anordnungen eines Stromschienen- und Verbindersystems bekannt, bei denen ein einziges Halteelement für Leiterelemente (Steckadapter) vorhanden ist, welches auf der Rückseite eines Tragorgans (Profilschiene) fest mit diesem Tragorgan verbunden ist (EP 1049227 A2; DE 102005023452 A1). Die Ausbildung eines Halteelements auf der Rückseite eine Tragorgans führt zur Vergrößerung der Einbautiefe, beispielsweise in einem Schaltschrank.

Nach der DE 102005023452 A1 wird vorgeschlagen, das Halteelement mit dem Tragorgan einstückig auszubilden oder eine Schraubverbindung zu wählen.

Die EP 1049227 A2 zeigt eine mehrteilige Anordnung für das Halteelement. Ein erstes Element ist (vorzugsweise) einstückig mit dem Tragorgan ausgebildet; ein zweites Element dient der Aufnahme der Flachschienen. Beide Elemente sind mit einander verrastbar ausgebildet. Der mehrteilige Aufbau hat Nachteile in Bezug auf Produktions- und Materialkosten.

Der Erfindung liegt die Aufgabe zugrunde, ein Stromschienen- und Verbindersystem anzugeben, bei dem eine einfache und schnelle Montage, bzw. Demontage möglich sein soll und bei dem die Kontakte zu den Flachschienen und zu den Schaltgeräten fingersicher gegenüber Berührung der spannungführenden Elementen ausgebildet sind.

Die Aufgabe wird erfindungsgemäß durch die Merkmale des unabhängigen Anspruches gelöst, während den abhängigen Ansprüchen vorteilhafte Weiterbildungen der Erfindung zu entnehmen sind.

Der Kern der Erfindung liegt darin, dass Leiterverbindungen in Steckmodulen ausgebildet sind, die der Potentialführung von den Flachschienen zu den Schaltgeräten dienen. Weiter sind weibliche Eingangskontakte der Leiterverbindungen zur Kontaktierung in den Flachschienen und männliche Zugangskontakte der Leiterverbindungen zur Kontaktierung mit den Schaltgeräten als starre Steckkontakte ausgebildet. Somit sind Gehäuse aus Isolierstoff jeweils als Steckmodule ausgebildet. Die den jeweiligen Schaltgeräten zugeordneten Steckmodule können unterschiedliche Ausbildung haben, so dass individuelle, unterschiedliche Steckmodule gebildet sind.

Der Vorteil des vorgelegten Systems liegt vornehmlich in der Möglichkeit der schnellen und werkzeuglosen Montage, bzw. Demontage.

Im weiteren werden Merkmale aufgeführt, die einzeln oder in Kombination miteinander beansprucht und verwirklicht sein können.

Vorzugsweise soll die Anordnung aus Stromschienen- und Verbindersystem dreipolig sein. Eine besondere Ausführung besteht darin, dass in einem Steckmodul nur eine Leiterverbindung eingebracht ist (einpoliges Steckmodul). Die Ausführung eines einpoligen Steckmoduls kann relativ schmal ausgeführt sein. In dreipoligen Steckmodulen sind drei Leiterverbindungen zwischen einem elektrischen Kontakt zur Flachschiene und einem Steckstift zum Schaltgerät realisiert. Die Leiterverbindungen können flexibel gestaltet sein (beispielsweise als Litze) oder starr ausgebildet sein. Die Leiterverbindungen können im Gehäuse des Steckmoduls oder außerhalb des Gehäuses verlaufen.

Die Schienen- und Verbinderanordnung dient der Potentialführung von Flachschienen zu anreihbaren Schaltgeräten. Es wird von Schaltgeräten ausgegangen, die mit ihrer Rückseite auf einem Tragorgan anreihbar sind, wobei der Regelfall betrachtet wird, dass ein als Hutprofilschiene ausgebildetes Tragorgan horizontal in einer Verteileranlage oder einem Schaltschrank oder dergleichen angeordnet ist. Die Vorderseite der Schaltgeräte enthält Bedienelemente und Zu- und Abgangskontakte. Die erfindungsgemäße Anordnung bezieht sich auf Schaltgeräte, deren Zugangskontakte (Einspeisekontakte, Spannungszufuhr) entweder alle oben (oberhalb des horizontal angeordneten Tragorgans) oder alle unten (unterhalb des horizontal angeordneten Tragorgans) liegen. Gemäß der in der Beschreibung und in den Figuren dargestellten Ausführungsformen werden in der vorliegenden Anmeldung Schaltgeräte behandelt, deren Zugangskontakte oben liegen. Die Erfindung ist jedoch nicht auf diese geometrische Situation beschränkt, sie kann auch realisiert werden, wenn die Zugangskontakte der Schaltgeräte unten liegen.

Die Halteelemente für das Stromschienensystem liegen senkrecht zum Tragorgan und sind einseitig (oberhalb oder unterhalb) von dem Tragorgan entfernt. Sie sind mit einer solchen Länge ausgebildet, dass ein Freiraum zwischen dem Stromschienensystem und den anreihbaren Schaltgeräte vorhanden ist. Es wird also mit Freiraum der Abstand bezeichnet, der zwischen Kastenprofil des Stromschienensystems und den Seiten der Schaltgeräte, die die Zugangskontakte aufweisen, vorhanden ist, ohne dass die betrachte Seite der Schaltgeräte in Annäherung oder Berührung mit dem Kastenprofil kommt.

Die Halteelemente sind derart ausgebildet, dass sie auf das Tragorgan aufschiebbar oder aufclipsbar sind.

Die erfindungsgemäßen Steckmodule sind mit starren Kontakten versehen, die zum Aufsetzen auf die Flachschienen geeignet sind. Diese Kontakte können beispielsweise als Tulpenkontakte ausgebildet sein. Ein Steckmodul kann in der Breite eines ihm zugeordneten Schaltgeräts ausgebildet sein.

Das Kastenprofil zur Aufnahme der Flachschienen weist eine geschlossene Rückseite auf, welche dem Tragorgan zugewandt ist. An dieser Rückseite sind die Halteelemente befestigt. Die der Rückseite gegenüberliegende offene Vorderseite dient dem Zugang zu den Schmalseiten der Flachschienen. Die einzelnen Flachschienen sind im Kastenprofil gegeneinander isoliert.

Die Steckmodule weisen gemeinsam mindestens einen in einen Zugangskontakt eines Schaltgeräts steckbaren Leiter auf, so dass Potential von einer Flachschiene zu dem Schaltgerät geführt wird. Der steckbare Leiter kann als Steckstift, beispielsweise gecrimpt an einer Litze, ausgeführt sein.

Die Gestaltung des Gehäuses mit einer starren Führung der Leiterverbindung ist derart, dass mindestens ein am Ende der Leiterverbindung vorhandenes Steckelement (im folgenden auch Zugangskontakt) unmittelbar in eine Einspeise- oder Zugangsöffnung eines anreihbaren Schaltgeräts einführbar ist.

Die Eingangskontakte und die Zugangskontakte sind auf einer der Flächen eines Steckmoduls abstehend und parallel zueinander ausgebildet.

Die Länge eines Stromschienensystems kann kürzer ausgebildet sein als die Länge eines Halteorgans. In einem solchen Fall, in dem auf dem Halteorgan nebeneinander in der Breite mehr Schaltgeräte aufgesetzt sind, als es der Länge des Stromschienensystems entspricht, bedient man sich eines weiteren (zweiten) Stromschienensystems, welches dem ersten Stromschienensystem unmittelbar benachbart auf dem Halteorgan angeordnet wird. Zur Potentialführung zwischen dem ersten und dem zweiten Stromschienensystem wird ein als Brückenmodul bezeichnetes Steckmodul eingesetzt. Das Brückenmodul weist mindestens eine Leiterverbindung auf, die der Potentialüberbrückung von einer der Flachschienen des ersten Stromschienensystems zu einer der Flachschienen des zweiten Stromschienensystems dient.

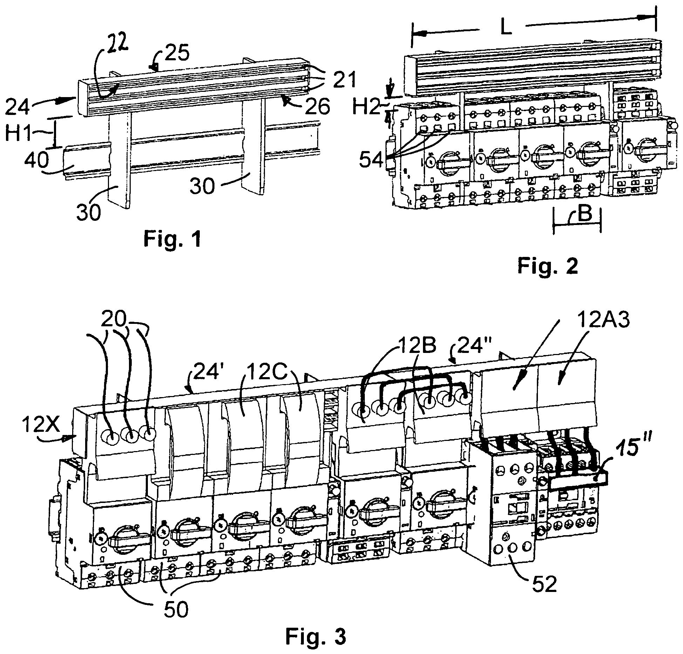

In einem Steckmodul kann jeder Leiterverbindung ein weiblicher Steckkontakt im Gehäuse zugeordnet sein. Bei einem ersten dieser Steckmodule wird dadurch ein sogenanntes Einspeisemodul (12X in Fig. 3) gebildet. Das Einspeisemodul wird mit einer z.B. dreipoligen Potential-Zuführungsleitung kontaktiert, wobei die Zugangsleitung flexibel ausgeführt sein.

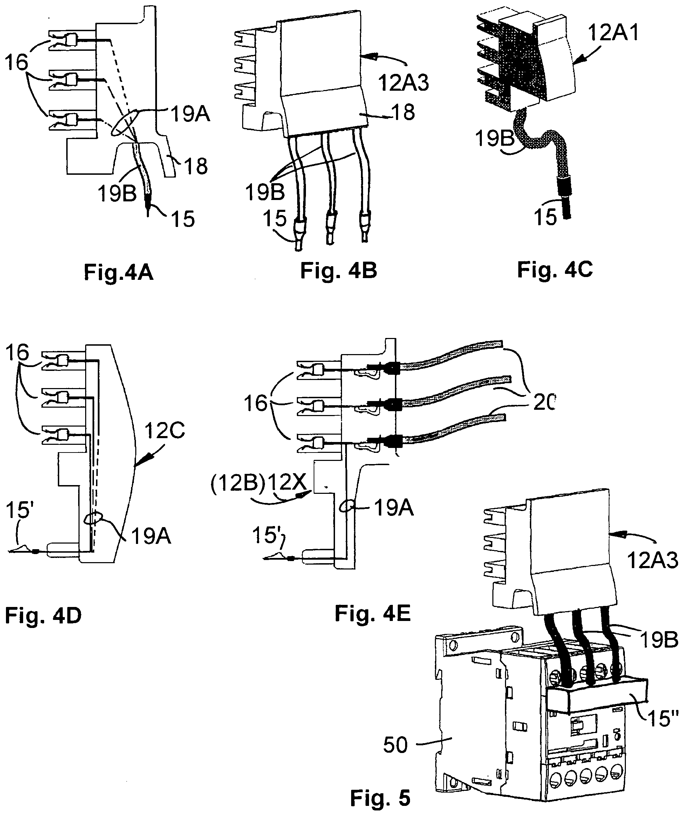

Bei einem anderen dieser Steckmodule wird dadurch ein sogenanntes Brückenmodul (12B in Fig. 4E) gebildet. Zwei nebeneinander angeordnete Brückenmodule werden über die Steckkontakte im Gehäuse miteinander elektrisch verbunden.

Sollte an einem Platz, an dem normalerweise ein Schaltgerät platziert wird, das Schaltgerät entnommen sein, wird zur Abdeckung der frei zugänglichen Öffnung auf dem Stromschienensystem eine Blindabdeckung gesetzt, so dass spannungsführende Teile fingersicher geschützt sind.

Weitere Einzelheiten und Vorteile der Erfindung ergeben sich aus den folgenden, anhand von Figuren erläuterten Ausführungsbeispielen. Es zeigen
- Figur 1:: eine Darstellung von Tragorgan, Halteelemente und Stromschienensystem;
- Figur 2:: eine Darstellung, in der Schaltgeräte auf dem Tragorgan befestigt sind;
- Figur 3:: eine Darstellung wie in Fig. 2, jedoch mit Steckmodulen auf dem Stromschienensystem;
- Figur 4A bis 4E:: verschiedene Steckmodule und
- Figur 5:: eine Zusammenschaltung eines Steckmoduls mit einem Schaltgerät.

In Fig. 1 ist ein Stromschienensystem mit zwei Halteelementen 30 dargestellt, welches an einem als Hutprofilschiene ausgebildeten Tragorgan 40 aufgebracht ist. Das Stromschienensystem besteht - in einer dreipoligen Ausfertigung - aus drei parallel nebeneinander liegenden Flachschienen 21. Die Halteelemente 30 sind senkrecht zum Tragorgan 40 und zum Stromschienensystem ausgebildet, so dass die Flachschienen 21 parallel zum sich längserstreckenden Tragorgan 40 zu liegen kommen. Die Halteelemente 30 liegen einseitig von dem Tragorgan 40 entfernt und sind mit einer Länge H1 zwischen Oberkante der Profilschiene und Unterkante des Stromschienensystems ausgebildet, sodass ein Freiraum H2 zwischen dem Stromschienensystem und den anreihbaren Schaltgeräte 50, 52 vorhanden ist (siehe Fig. 2 und 3).

Die Halteelemente 30 sind so ausgebildet, dass sie auf das Tragorgan 40 aufschiebbar oder aufclipsbar sind. Die Flachschienen 21 sind in einem mehrwandigen Kastenprofil 24 aus Isolierstoff umschlossen angeordnet und gehalten. Allein ihre Schmalseiten 22 sind von außen frei zugänglich. Das Kastenprofil 24 weist eine geschlossene Rückseite 25 auf, die dem Tragorgan 40 zugewandt ist und an der die Halteelemente 30 befestigt sind und es weist eine der Rückseite 25 gegenüberliegende offene Vorderseite 26 auf, die dem Zugang zu den Schmalseiten 22 der Flachschienen 21 dient.

Fig. 2 zeigt eine Darstellung mit auf dem Tragorgan befestigten Schaltgeräten, jedoch ohne Steckmodule. Das Stromschienensystem hat die Länge L. Zwischen der Oberkante der Schaltgeräte und der Unterkante des Stromschienensystems ist ein Freiraum H2 vorhanden. Die Schaltgeräte kommen nicht in Annäherung oder Berührung mit dem Kastenprofil 24. Die Schaltgeräte haben auf der Oberseite Zugangs- oder Einspeisekontakte 54. Eingezeichnet mit Bezugszeichen B ist ein Breitenmaß eines Schaltgeräts 50, 52. Als Vorteil der Erfindung kann vermerkt werden, dass Schaltgeräte mit verschiedenen Breitenmaßen und mit unterschiedlichen Abständen nebeneinander installiert werden können.

Die Fig. 3 zeigt eine Darstellung mit verschiedenen Schaltgeräten 50, 52 und verschiedenen Steckmodulen auf dem Stromschienensystem. Die Schaltgeräte können unterschiedliche Breiten oder unterschiedliche Höhenabstände (Freiraum zwischen Oberkante der Schaltgeräte und Unterkante des Stromschienensystems) aufweisen. Auf der Rückseite der Anordnung in Fig. 3 sind zwei Stromschienensysteme (Bezugszeichen 24' und 24") nebeneinander angeordnet.

Erfindungsgemäße Steckmodule (12B, 12C,12X) weisen mindestens eine Leiterverbindung 19A zur Potentialführung von den Flachschienen 21 zu einem Schaltgerät 50, 52 auf, derart, dass die Leiterverbindung 19A zwischen einem elektrischen Kontakt 16 zum Aufsetzen und Kontaktieren der Flachschienen 21 und einem starr steckbaren Leiterelement 15', 15" verläuft, welches einem Einspeisekontakt 54 am Schaltgerät 50, 52 zugeordnet ist.

In einem der Steckmodule kann jeder Leiterverbindung 19A, 19B ein weiblicher Steckkontakt im Gehäuse zugeordnet sein, vgl. Steckmodule 12B, 12X in Fig. 3 und in Fig. 4E.

Bei einem ersten Steckmodul (12X) dieser Ausführung wird dadurch ein sogenanntes Potentialzuführmodul oder Einspeisemodul gebildet. Es dient neben der Kontaktierung zwischen Flachschiene und Schaltgerät der z.B. dreipoligen Potentialeinspeisung vom Netz in das Stromschienensystem. Es umfasst einen weiblichen Kontakt für eine Potential-Zuführungsleitung, die auf einen Kontakt 16 zum Kontaktieren einer Flachschiene und ebenfalls zu einem, vorzugsweise steckbaren Kontakt 15' zu einer Zugangsöffnung an einem Schaltgerät führt. Die elektrische Verbindung 19A zwischen Potential-Zuführungsleitung und dem steckbaren Kontakt 15' kann flexibel oder starr (dann vorzugsweise im Gehäuse des Steckmoduls) ausgebildet sein.

Bei einem anderen Steckmodul (12B) der vorgenannten Ausführung wird mittels Ausbildung der weiblichen Steckkontakte ein sogenanntes Brückenmodul gebildet. Zwei nebeneinander angeordnete Brückenmodule lassen sich über die weiblichen Steckkontakte im Gehäuse miteinander elektrisch verbinden.

Nach Fig. 3 werden ausgehend vom ersten Stromschienensystem (24') fünf Schaltgeräte mit Spannung versorgt, wobei das erste, links angeordnete Schaltgerät über das Einspeisemodul 12X angeschlossen ist. Die drei weiteren rechts benachbarten Schaltgeräte werden mit den Steckmodulen 12C, das letzte Schaltgerät der betrachteten Reihung wird mit dem Brückenmodul 12B unter Spannung gesetzt. Das erste Brückenmodul 12B in der Reihung dient weiterhin der Potentialübergabe von dem ersten Stromschienensystem 24' über das benachbarte Brückenmodul 12B zum zweiten Stromschienensystem 24". Am zweiten Stromschienensystem sind - hier im Beispiel - drei Schaltgeräte 52 angeschlossen, von denen das erste über das zweite Brückenmodul 12B dreipolig mit Spannung versorgt wird, und die beiden letzten Schaltgeräte in der Reihe über die dreipoligen Steckmodule 12A3 angeschlossen sind. Die beiden letzten Schaltgeräte haben einen anderen Höhenabstand H2 zum zweiten Stromschienensystem, so dass flexible Leitungen 19B als Spannungsverbindung eingesetzt werden. Am letzen Schaltgerät in der Reihe enden die flexiblen Leitungen 19B in einer Steckerleiste 15", so dass sie dort starr in die Einspeisekontakte 54 des Schaltgeräts eingesteckt sind (siehe auch Fig. 5).

Die Teilfiguren 4A bis 4E zeigen unterschiedliche Ausführungen. In Fig. 4A und 4B ist ein dreipoliges Steckmodul 12A3 gezeigt, wo in Fig. 4A die Darstellung als Schnitt zu lesen ist. Von den Tulpenkontakten 16 gehen Verbindungen zu den flexiblen Leitungen 19B, die in Streckerstiften 15 enden. Am Gehäuse der Verbinder ist eine Griffleiste 18 vorhanden, die der bequemen Handhabung beim Stecken dient. Die Griffleiste 18 liegt parallel zu Orientierung der Flachschienen. In Fig. 4D ist ein Steckmodul 12C mit mindestens einer Griffleiste dargestellt, wobei die Griffleiste senkrecht zur Orientierung der Flachschienen liegt. Die Ausbildung der senkrecht liegenden Griffleisten bei den Steckmodulen des Typs mit dem Bezugszeichen 12C ist in Fig. 3 in perspektivischer Darstellung noch deutlicher zu erkennen. In Fig. 4E ist die Griffleiste am Steckmodul 12X aus darstellungstechnischen Gründen nicht sichtbar.

Fig. 4B zeigt ein dreipoliges Steckmodul 12A3 und Fig. 4C ein einpoliges Steckmodul 12A1; der prinzipielle Aufbau ist ansonsten gleich.

Die Figur 4D zeigt ein dreipoliges Steckmodul mit starren, im Gehäuse verlaufenden Verbindungsleitungen 19A zwischen Tulpenkontakten 16 und den männlichen Steckkontakten 15', die in die Einspeisekontakte 54 eines Schaltgeräts eingreifen können. Die Abstände zwischen den Tulpenkontakten 16 und den Steckkontakten 15' sind auf die geometrischen Abmessungen der Schaltgeräte eingestellt.

Die Fig. 4E zeigt ein Steckmodul (12B oder 12X) mit starren internen Leiterverbindungen 19A und weiblichen Steckkontakten auf der rechten Gehäusefläche (nach Fig. 4E), die den Kontakten 16 und 15' auf der anderen, linken Gehäusefläche gegenüber liegen. Die Zuführungsleitungen 20 können flexibel ausgebildet sein und vornehmlich zur Spannungsversorgung aus dem Netz dienen oder sie werden als Brückenleitungen zwischen zwei Steckmodulen vom Typ 12B genutzt.

In der letzten Fig. 5 ist - vergleichbar mit Fig. 3, dort rechte Steckmodulkombination - ein Schaltgerät 50 mit einem dreipoligen Steckmodul 12A3 dargestellt. Der Anschluss zum Schaltgerät erfolgt über flexible Leitungen 19B zur Steckerleiste 15", wo starre Steckstifte zum Stecken in die Einspeisekontakte 54 des Schaltgeräts 50 vorhanden sind.

### Bezugszeichen

- 12A1: einpoliges Steckmodul
- 12A3: dreipoliges Steckmodul mit flexiblen Abgangsleitungen
- 12B: Steckmodul als Brückenmodul
- 12C: dreipoliges Steckmodul
- 12X: Einspeise- oder Potentialzuführungsmodul
- 15 15': Steckerstift, Federsteckkontakt
- 15": Steckerleiste
- 16: Tulpenkontakte
- 18: Griffleiste
- 19A: Leiterverbindung im Gehäuse
- 19B: Leiter (Litze)
- 20: Leitungen
- 21: Stromschiene, Flachschiene
- 22: Schmalseite
- 24 24' 24": Kastenprofil
- 25 26: Rückseite, Vorderseite
- 30: Halteelement
- 40: Tragorgan, Hutprofil-Tragschiene
- 50, 52: Schaltgerät(e)
- 54: Einspeisekontakte, Zugangsöffnungen
- B: Breite
- H1 H2: Abstandsmaß; Freiraum
- L: Längserstreckung

## Patentansprüche

1. Mehrpolige Anordnung eines Stromschienen- und Verbindersystems zur Spannungsversorgung für mindestens zwei nebeneinander auf einem sich längserstreckenden Tragorgan befindliche elektrische Schaltgeräte,
wobei das Stromschienensystem umfasst
- in einem mehrwandigen Kastenprofil (24) aus Isolierstoff parallel nebeneinander angeordnete Flachschienen (21),
- mindestens ein auf das Tragorgan (40) aufbringbares, zum Halten der Flachschienen (21) dienendes Halteelement (30),
- wobei das mindestens eine Halteelement (30) derart ausgebildet ist, so dass die Flachschienen (21) parallel zum sich längserstreckenden Tragorgan (40) zu liegen kommen,
- und die Flachschienen (21) eine Längserstreckung (L) aufweisen, die mindestens der Summe der Breite (B) mehrerer mit ihrer Rückseite auf dem Tragorgan (40) anreihbarer Schaltgeräte (50, 52) entspricht,
- und die Flachschienen (21) derart gehalten sind, dass ihre Schmalseiten (22) von außen frei zugänglich sind,
und das Verbindersystem umfasst
- elektrische Leiterverbindungen (19A, 19B), die der Potentialführung von den Flachschienen (21) zu den Schaltgeräten (50, 52) dienen,
- wobei die Leiterverbindungen (19A, 19B) von außen auf die Schmalseiten (22) der Flachschienen (21) aufsetzbar sind,
- wobei die Leiterverbindungen (19A, 19B) in einem jeweils ein Steckmodul (12A3, 12B, 12C, 12X) bildendes Gehäuse (12A3, 12B, 12C, 12X) aus Isolierstoff untergebracht sind, und
- dass Eingangskontakte (16) der Leiterverbindungen (19A, 19B) zur Kontaktierung in den Flachschienen und Zugangskontakte (15', 15") der Leiterverbindungen (19A, 19B) zur Kontaktierung mit den Schaltgeräten als starre Steckkontakte (16, 15', 15") ausgebildet sind,
**dadurch gekennzeichnet, dass** zwei Halteelemente (30) parallel liegend und senkrecht zur Längserstreckung des Tragorgans (40) und senkrecht zur Längserstreckung des Stromschienensystems vorhanden sind, und sie derart ausgebildet sind, dass sie auf das Tragorgan (40) aufschiebbar oder aufclipsbar sind.

2. Anordnung nach Anspruch 1, **dadurch gekennzeichnet, dass** die Halteelemente (30) einseitig von dem Tragorgan (40) entfernt liegen und mit mindestens einer solchen Länge (H1) ausgebildet sind, dass ein Freiraum (H2) zwischen dem Stromschienensystem und den anreihbaren Schaltgeräten (50,52) vorhanden ist.

3. Anordnung nach einem der vorstehenden Ansprüche, **dadurch gekennzeichnet, dass** das Kastenprofil (24) eine geschlossene Rückseite (25) aufweist, die den Halteelementen (30) zugewandt ist und an der die Halteelemente (30) befestigt sind und es eine der Rückseite (25) gegenüberliegende offene Vorderseite (26) aufweist, die dem Zugang zu den Schmalseiten (22) der Flachschienen (21) dient.

4. Anordnung nach einem der vorstehenden Ansprüche, **dadurch gekennzeichnet, dass** in einem Steckmodul (12B, 12C, 12X) die Leiterverbindungen (19A, 19B) einpolig oder dreipolig ausgebildet sind.

5. Anordnung nach einem der vorstehenden Ansprüche, **dadurch gekennzeichnet, dass** Leiterverbindungen zur Kontaktierung mit den Schaltgeräten (50,52) über flexible Leitungen (19B) von einem Steckmodul (12A3) zu einer Steckerleiste (15") mit starren Steckkontakten geführt sind.

6. Anordnung nach einem der vorstehenden Ansprüche, **dadurch gekennzeichnet, dass** die Eingangskontakte als Tulpenkontakte (16) ausgebildet sind.

7. Anordnung nach einem der vorstehenden Ansprüche, **dadurch gekennzeichnet, dass** die Eingangskontakte (16) und die Zugangskontakte (15') auf einer der Flächen eines Steckmoduls (12B, 12C, 12X) abstehend ausgebildet sind.

8. Anordnung nach einem der vorstehenden Ansprüche, **dadurch gekennzeichnet, dass** auf der Gehäuseoberfläche eines Steckmoduls (12B, 12C, 12X) mindestens eine Griffleiste (18) ausgebildet ist.

9. Anordnung nach dem vorstehenden Anspruch, **dadurch gekennzeichnet, dass** jeder Leiterverbindung (19A, 19B) in einem Steckmodul (12B, 12X) ein weiblicher Steckkontakt im Gehäuse zugeordnet ist.

## Claims

1. A multipole arrangement of a busbar and connector system for supplying the power for at least two electrical switching devices located alongside one another on a longitudinally extending support element,
wherein the busbars system comprises
- flat bars (21) arranged in parallel alongside one another in a multi-walled box section (24) of an insulating material,
- at least one retaining element (30) that can be applied to the support element (40), serving to retain the flat bars (21),
- wherein the at least one retaining element (30) is configured so that the flat bars (21) are situated parallel to the longitudinally extending support element (40),
- and the flat bars (21) have a longitudinal extension (L), which corresponds to at least the sum of the widths of a plurality of switching devices (50, 52) mountable side by side on the support element (40),
- and the flat bars (21) are retained so that their narrow sides (22) are freely accessible from the outside,
and the connector system comprises
- electrical conductor connections (19A, 19B), which serve to carry the potential from the flat bars (21) to the switching devices (50, 52),
- wherein the conductor connections (19A, 19B) are attachable from the outside to the narrow sides (22) of the flat bars (21),
- wherein the conductor connections (19A, 19B) in each case are housed in a housing (12A3, 12B, 12C, 12X) of an insulating material forming a plug-in module (12A3, 12B, 12C, 12X), and
- the input contacts (16) of the conductor connections (19A, 19B) are configured for making contact in the flat rails and access contacts (15', 15") of the conductor connections (19A, 19B) for making contact with the switching devices as rigid plug-in contacts (16, 15', 15"),
**characterised in that** two retaining elements (30) are present lying in parallel and perpendicular to the longitudinal extension of the support element (40) and perpendicular to the longitudinal extension of the busbars system, and they are configured so that they can be slid or clipped onto the support element (40).

2. Arrangement according to claim 1, **characterised in that** the retaining elements (30) are situated away from the support element (40) on one side and are configured with at least such a length (H1) that a clearance (H2) is present between the busbars system and the switching devices (50, 52) mountable side by side.

3. Arrangement according to any one of the preceding claims, **characterised in that** the box section (24) has a sealed rear side (25), turned towards the retaining elements (30) and to which the retaining elements (30) are secured and having an open front side (26) opposite the rear side (25) serving for access to the narrow sides (22) of the flat bars (21).

4. Arrangement according to any one of the preceding claims, **characterised in that** in a plug-in module (12B, 12C, 12X) the conductor connectors (19A, 19B) have a single-pole or three pole configuration.

5. Arrangement according to any one of the preceding claims, **characterised in that** conductor connections for making contact with the switching devices (50, 52) are carried via flexible cables (19B) from a plug-in module (12A3) to a push-on terminal strip (15") with rigid plug-in contacts.

6. Arrangement according to any one of the preceding claims, **characterised in that** the input contacts are configured as tulip contacts (16).

7. Arrangement according to any one of the preceding claims, **characterised in that** the input contacts (16) and access contacts (15') are configured protruding from one of the surfaces of a plug-in module (12B, 12C, 12X).

8. Arrangement according to any one of the preceding claims, **characterised in that** on the housing surface of a plug-in module (12B, 12C, 12X) at least one grab handle (18) is configured.

9. Arrangement according to the above claim, **characterised in that** each conductor connection (19A, 19B) in a plug-in module (12B, 12X) is associated with a female plug-in contact in the housing.

## Revendications

1. Dispositif multipolaire d'un système de rails conducteurs et de connecteurs pour l'alimentation en tension pour au moins deux appareils commutateurs électriques qui se trouvent sur un élément porteur s'étendant en longueur, le système de rails conducteurs comprenant
- des rails plats (21) agencés parallèlement les uns à côté des autres dans un profilé (24) en forme de caisson à parois multiples en un matériau isolant,
- au moins un élément de maintien (30) pouvant être placé sur l'élément porteur (40) et servant à tenir les rails plats (21),
- l'au moins un élément de maintien (30) étant conçu de telle sorte que les rails plats (21) viennent se placer parallèlement à l'élément porteur (40) s'étendant en longueur,
- et les rails plats (21) ayant une extension longitudinale (L) qui correspond au moins à la somme de la largeur (B) de plusieurs appareils commutateurs (50, 52) pouvant être rangés avec leur arrière sur l'élément porteur (40),
- et les rails plats (21) étant maintenus de telle sorte que leurs côtés étroits (22) sont accessibles librement de l'extérieur,
et le système de connecteurs comprenant
- des liaisons électriques de conducteurs (19A, 19B) qui servent à conduire le potentiel des rails plats (21) aux appareils commutateurs (50, 52),
- les liaisons de conducteurs (19A, 19B) pouvant être placées de l'extérieur sur les côtés étroits (22) des rails plats (21),
- les liaisons de conducteurs (19A, 19B) étant agencées dans un boîtier (12A3, 12B, 12C, 12X) en un matériau isolant qui forme à chaque fois un module enfichable (12A3, 12B, 12C, 12X) et
- des contacts d'entrée (16) des liaisons de conducteurs (19A, 19B) pour la mise en contact dans les rails plats et des contacts d'accès (15', 15") des liaisons de conducteurs (19A, 19B) pour la mise en contact avec les appareils commutateurs étant conçus sous forme de contacts enfichables (16, 15', 15"), **caractérisé en ce que** deux éléments de maintien (30) sont prévus de manière à être parallèles et à être perpendiculaires à l'extension longitudinale de l'élément porteur (40) et perpendiculaires à l'extension longitudinale du système de rails conducteurs et **en ce qu'**ils sont conçus de telle sorte que l'on peut les glisser ou les clipser sur l'élément porteur (40).

2. Dispositif selon la revendication 1, **caractérisé en ce que** les éléments de maintien (30) se trouvent éloignés d'un côté de l'élément porteur (40) et sont conçus avec au moins une longueur (H1) telle qu'un espace libre (H2) existe entre le système de rails conducteurs et les appareils commutateurs (50, 52) pouvant être rangés.

3. Dispositif selon l'une des revendications précédentes, **caractérisé en ce que** le profilé (24) en forme de caisson comporte un arrière fermé (25) qui est proche des éléments de maintien (30) et auquel les éléments de maintien (30) sont fixés et il comporte un avant ouvert (26) qui est à l'opposé de l'arrière (25) et qui sert à l'accès aux côtés étroits (22) des rails plats (21).

4. Dispositif selon l'une des revendications précédentes, **caractérisé en ce que**, dans un module enfichable (12B, 12C, 12X), les liaisons de conducteurs (19A, 19B) sont conçues unipolaires ou tripolaires.

5. Dispositif selon l'une des revendications précédentes, **caractérisé en ce que** des liaisons de conducteurs pour la mise en contact avec les appareils commutateurs (50, 52) sont guidées par l'intermédiaire de lignes flexibles (19B) d'un module enfichable (12A3) à un connecteur (15") avec des contacts enfichables rigides.

6. Dispositif selon l'une des revendications précédentes, **caractérisé en ce que** les contacts d'entrée sont conçus comme des contacts en tulipe (16).

7. Dispositif selon l'une des revendications précédentes, **caractérisé en ce que** les contacts d'entrée (16) et les contacts d'accès (15') sont conçus à une certaine distance les uns des autres sur l'une des surfaces d'un module enfichable (12B, 12C, 12X).

8. Dispositif selon l'une des revendications précédentes, **caractérisé en ce qu'**au moins une poignée (18) est conçue sur surface de boîtier d'un module enfichable (12B, 12C, 12X).

9. Dispositif selon la revendication précédente, **caractérisé en ce qu'**un contact enfichable femelle dans le boîtier est associé à chaque liaison de conducteurs (19A, 19B) dans un module enfichable (12B, 12X).
